(19) Europäisches Patentamt
European Patent Office
Office européen des brevets

(11) **EP 4 269 353 A1**

(12) **EUROPEAN PATENT APPLICATION**
published in accordance with Art. 153(4) EPC

(43) Date of publication:
**01.11.2023 Bulletin 2023/44**

(21) Application number: **21910900.6**

(22) Date of filing: **22.12.2021**

(51) International Patent Classification (IPC):
$C01G\ 25/02$ (2006.01)   $A61C\ 13/083$ (2006.01)
$C04B\ 35/486$ (2006.01)   $C04B\ 35/626$ (2006.01)
$C04B\ 35/634$ (2006.01)   $A61C\ 5/70$ (2017.01)

(52) Cooperative Patent Classification (CPC):
**C04B 35/486; A61C 5/70; A61C 13/083;**
**C01G 25/02;** C04B 2235/3225; C04B 2235/608;
C04B 2235/6562; C04B 2235/77; C04B 2235/96;
C04B 2235/9653; C04B 2235/9661

(86) International application number:
**PCT/JP2021/047686**

(87) International publication number:
**WO 2022/138760 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 JP 2020212777**

(71) Applicant: **Kuraray Noritake Dental Inc.
Kurashiki-shi, Okayama 710-0801 (JP)**

(72) Inventors:
• **NAKANO, Kirihiro
  Miyoshi-shi, Aichi 470-0293 (JP)**
• **KASHIKI, Nobusuke
  Miyoshi-shi, Aichi 470-0293 (JP)**
• **KUDO, Yasutaka
  Kurashiki-shi, Okayama 713-8550 (JP)**
• **ITO, Yoshihisa
  Miyoshi-shi, Aichi 470-0293 (JP)**

(74) Representative: **D Young & Co LLP
120 Holborn
London EC1N 2DY (GB)**

(54) **ZIRCONIA GRANULES, GREEN COMPACT, AND METHODS RESPECTIVELY FOR PRODUCING THOSE PRODUCTS**

(57)    The present invention provides a granule and green compact suited for obtaining a high-translucency and high-strength zirconia sintered body, and a high-density and uniform pre-sintered body. The invention also provides methods of production of such a granule and green compact. The present invention relates to a granule comprising zirconia, a stabilizing agent capable of preventing a phase transformation of zirconia, and a binder,

the granule having a compression ratio R of 0.46 to 0.53 as calculated by the formula (1) below when tapped and filled into a columnar die in compliance with JIS R 1628:1997, and compressed by uniaxial pressing at a rate of 1 mm/s to 33 MPa,

$$R = (H-D)/H \qquad (1)$$

wherein H represents a height of the granule tapped and filled into the columnar die before applying pressure, and D represents an amount of strain up to 33 MPa.

FIG.1

**Description**

TECHNICAL FIELD

The present invention relates to a granule and green compact for obtaining a high-density and uniform zirconia (zirconium(IV) oxide: $ZrO_2$) pre-sintered body, and a high-translucency and high-strength zirconia sintered body, and to methods of production of such a granule and green compact.

BACKGROUND ART

Generally, a ceramic powder or granule shrinks upon firing in a manner that depends on the firing temperature. Because such shrinkage occurs due to the primary particle density and the internal stress in the ceramic powder, a sintered body obtained by firing a green compact of a ceramic powder or granule requires fabrication of a high-density and uniform green compact.

For example, a green compact of primarily zirconia usually undergoes about 1% shrinkage in the production of a pre-sintered body, and shrinks as much as about 20% in the production of a sintered body. This has created a need for a zirconia pre-sintered body and zirconia green compact having high density and low density nonuniformity, in order to obtain a high-density and high-strength zirconia sintered body.

A CIP (Cold Isostatic Pressing) process, a technique available for the production of a green compact, can be used to reduce the uneven density distribution that can result in a green compact in uniaxial pressing. However, CIP cannot not fully resolve the unevenness in the green compact, and there is a need for a method that can produce a green compact having high density and low density nonuniformity.

In order to obtain a green compact having high density and low density nonuniformity, it is required to uniformly fill a dry powder into a die, and provide the level of flowability that allows the dry powder to rearrange itself and uniformly increase its density according to the applied pressure during pressing. In this connection, a method is generally available that adds an organic component binder to increase the flowability of primary particles. The organic components must be removed before a pre-sintered body or sintered body is obtained from the green compact. However, balancing between flowability and removal is a challenging task, and it is difficult to obtain a green compact having high density and low density nonuniformity, and, in turn, a sintered body having high translucency and high strength.

Taking polyvinyl alcohol as an example of a common binder, sufficient removal is not possible by firing, and the binder easily carbonizes in the process of obtaining a pre-sintered body, though its wide range of molecular weights enables easy flowability adjustments.

Concerning the foregoing issues, Non Patent Literatures 1 to 3 disclose compression and relaxation behaviors in relation to granules used for the production of a green compact.

Patent Literature 1 discloses sintered body densities, and a high-strength zirconia sintered body.

Concerning ceramic granules used to obtain a large-sized molded body or a molded body of a complex shape by pressing, Patent Literature 2 discloses a granule for obtaining a high-density sintered body that involves no damage or deformation, along with the compression failure strength of the granule.

CITATION LIST

Patent Literature

    Patent Literature 1: JP 2015-143178 A
    Patent Literature 2: JP 2006-27914 A

Non Patent Literature

    NPL 1: Junichiro Tsubaki et al., Mechanical Characterization of Spray-Dried Granules by Compression and Stress-Relaxation Technique, Journal of the Ceramic Society of Japan, Vol. 107, 11(1999) pp. 1093-1098
    NPL 2: Junichiro Tsubaki et al., Mechanical Characterization of Spray-Dried Granules by Compression and Stress-Relaxation Technique, Journal of the Ceramic Society of Japan, Vol.107, 12(1999) pp.1183-1187
    NPL 3: Junichiro Tsubaki et al., Roles of Chemical Engineering in Ceramic Industry, Chemical Engineering, Vol.48, No.1, pp. 34-38 (2003)

DISCLOSURE OF INVENTION

Technical Problem

In Non Patent Literatures 1 to 3, however, the tests are conducted with alumina particles, and are not necessarily applicable to zirconia in all cases. By studying granules that use alumina particles, the present inventors found that granules using alumina particles have a compression ratio of equivalently 0.54 or more when pressed to 33 MPa by uniaxial pressing, and do not easily pack under low pressure. That is, a high-density green compact cannot be produced with such granules at low pressure. Here, "low pressure" means a pressure of less than 10 MPa, and such a low pressure is not preferable because the granules do not adequately crush, and produce a low-density molded body having high density nonuniformity. Non Patent Literatures 1 to 3 include descriptions that granules undergo deformation and failure after the stress inflection point. However, it has been confirmed that this disagrees with the granules of the present invention using zirconia particles, in which deformation and failure occur before the inflection point.

Patent Literature 1 does not include a description concerning the compaction behavior of granules, and, because of the small diameter of primary particles in the powder, the green compact has low density and high density nonuniformity. Accordingly, a sintered body produced from the powder granule of Patent Literature 1 was found to have high density nonuniformity. Patent Literature 2 uses more than one component, such as polyvinyl alcohol and polyethylene glycol, as a binder that does not easily spread. This was found to be an issue because high density cannot be achieved unless high pressure is applied for molding, and, as such, the density does not increase at low pressures.

It is accordingly an object of the present invention to provide a granule and green compact having low density nonuniformity, and that are suited for obtaining a high-translucency and high-strength zirconia sintered body, and a pre-sintered body having low density nonuniformity. Another object of the invention is to provide methods of production of such a granule and green compact.

Solution to Problem

The present inventors conducted intensive studies to find a solution to the above problems, and, by focusing on the compaction and relaxation behavior of granules, found that a granule having a specific compression ratio and a specific stress can solve the foregoing issues by enabling the production of a green compact of uniform density even with low pressure. The present invention was completed after further studies based on this finding.

Specifically, the present invention includes the following.

[1] A granule comprising zirconia, a stabilizing agent capable of preventing a phase transformation of zirconia, and a binder,

the granule having a compression ratio R of 0.46 to 0.53 as calculated by the formula (1) below when tapped and filled into a columnar die in compliance with JIS R 1628:1997, and compressed by uniaxial pressing at a rate of 1 mm/s to 33 MPa,

$$R = (H-D)/H \qquad\qquad (1)$$

wherein H represents a height of the granule tapped and filled into the columnar die before applying pressure, and D represents an amount of strain up to 33 MPa.

[2] The granule according to [1], which has a stress of 7.20 MPa or more at a compression ratio R of 0.6 while being pressed in the columnar die.

[3] The granule according to [1] or [2], wherein the binder is a (meth)acrylic binder.

[4] The granule according to any one of [1] to [3], wherein primary particles constituting the granule have an average particle diameter of 45 to 200 nm.

[5] The granule according to any one of [1] to [4], wherein the stabilizing agent is yttria.

[6] The granule according to [5], wherein the content of the yttria is 2.5 to 8.5 mol% with respect to the total mole of the zirconia and the yttria.

[7] A green compact comprising a granule of any one of [1] to [6], and having a bulk density of 2.9 to 3.5 g/cm$^3$.

[8] The green compact according to [7], wherein the stabilizing agent contained in the granule is yttria.

[9] The green compact according to [8], wherein the content of the yttria is 2.5 to 8.5 mol% with respect to the total mole of the zirconia and the yttria.

[10] A method for producing a granule, comprising:

a step of mixing zirconia and a stabilizing agent capable of preventing a phase transformation of zirconia to obtain a zirconia raw material composition;
a pulverization step of pulverizing the zirconia raw material composition to obtain particles having an average particle diameter of 45 to 200 nm in primary particles; and
a step of adding a binder to the particles, and granulating the particles to obtain a granule that comprises zirconia, a stabilizing agent capable of preventing a phase transformation of zirconia, and the binder.

[11] The method for producing a granule according to [10], wherein the binder is a (meth)acrylic binder.

[12] The method for producing a granule according to [10] or [11], wherein the stabilizing agent is yttria.

[13] A method for producing a green compact that has a compression ratio R of 0.46 to 0.53 as calculated by the formula (1) below when a granule of any one of [1] to [6] is tapped and filled into a columnar die, and compressed by uniaxial pressing at a rate of 1 mm/s to 33 MPa,

$$R = (H-D)/H \qquad (1)$$

wherein H represents a height of the granule tapped and filled into the columnar die before applying pressure, and D represents an amount of strain up to 33 MPa.

[14] The method for producing a green compact according to [13], wherein the green compact has a stress of 7.20 MPa or more at a compression ratio R of 0.6 while the granule being pressed in the columnar die.

Advantageous Effects of Invention

According to the present invention, a granule and green compact can be provided that have low density nonuniformity, and are suited for obtaining a high-translucency and high-strength zirconia sintered body, and a pre-sintered body having low density nonuniformity. The present invention can also provide methods of production of such a granule and green compact. According to the present invention, a green compact can be provided that has uniform density even with low pressure. A granule showing the compaction behavior of the present invention can produce a high-density green compact of low density nonuniformity with no cracking or chipping, and can be suitably used in applications such as dental materials that exhibit high translucency and high strength after firing, regardless of which part of the green compact is used.

BRIEF DESCRIPTION OF DRAWINGS

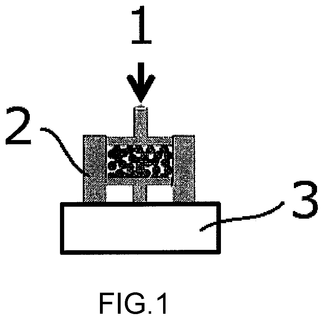

FIG. 1 is a schematic view representing a measurement method of compression ratio R of the present invention.

DESCRIPTION OF EMBODIMENTS

A granule of the present invention is a granule comprising zirconia, a stabilizing agent capable of preventing a phase transformation of zirconia (hereinafter, also referred to as "stabilizing agent"), and a binder,
the granule having a compression ratio R of 0.46 to 0.53 as calculated by the formula (1) below when tapped and filled into a columnar die in compliance with JIS R 1628:1997, and compressed by uniaxial pressing at a rate of 1 mm/s to 33 MPa,

$$R = (H-D)/H \qquad (1)$$

wherein H represents a height of the granule tapped and filled into the columnar die before applying pressure, and D represents an amount of strain up to 33 MPa. Preferably, the uniaxial pressing is performed under atmospheric pressure.

A granule of the present invention has a compression ratio R of 0.46 or more, preferably 0.47 or more, more preferably 0.48 or more. With a compression ratio R of less than 0.46, the granule becomes more likely to crush, and localized crushing occurs following the stress in response to a certain pressure applied during molding. That is, density nonuniformity tends to occur in a green compact. A granule of the present invention has a compression ratio R of 0.53 or less, preferably 0.52 or less, more preferably 0.51 or less. The granule does not easily crush when the compression ratio R is more than 0.53, and fails to provide a uniform green compact with a low pressure of less than 10 MPa in molding, increasing the likelihood of density nonuniformity. A green compact means a compact that results from the molding of a granule of the present invention under an applied external force, and that involves no necking between particles because it is unfired. The compression ratio R can be measured using the method described in the EXAMPLES section below.

A green compact of low density nonuniformity can be obtained when a granule of the present invention has the foregoing ranges of compression ratios R. The green compact can be used to provide a pre-sintered body of low density nonuniformity, and, in turn, a high-translucency and high-strength zirconia sintered body having low density nonuniformity.

The height of the granule in the columnar die according to the formula (1) after tapping and filling and before pressure application is preferably 8.0 to 13.0 cm, more preferably 8.5 to 12.5 cm, even more preferably 9.0 to 12.0 cm. The amount of strain up to 33 MPa in the formula (1) is preferably more than 4.60 cm and less than 6.00 cm, more preferably 4.65 cm or more and 5.95 cm or less, even more preferably 4.70 cm or more and 5.95 cm or less. A green compact of low density nonuniformity can be obtained when the granule has the foregoing ranges of compression ratios R within these ranges.

A granule of the present invention is preferably a granule having a stress of 7.20 MPa or more, more preferably a granule having a stress of 7.50 MPa or more at a compression ratio R of 0.6. With a stress of less than 7.20 MPa, the granule does not easily crush while being packed, and may increase the density nonuniformity as a result of a decrease in the density uniformity of the green compact. The stress at a compression ratio R of 0.6 can be measured using the method described for compression ratio R in the EXAMPLES section below.

The binder used in the present invention has a tensile elongation in the range of preferably 120 to 800%, more preferably 135 to 720%, even more preferably 150 to 670%. A tensile elongation of 120% or more is preferred because it produces a compression ratio R of 0.53 or less. A tensile elongation of 800% or less is preferred because it prevents chipping in the green compact, and provides superior shape retention.

A binder of the present invention is not particularly limited, and may be a known binder, for example, a polymer. The constituent polymer of the binder may be, for example, an organic binder. Examples of the organic binder include common polymers, such as (meth)acrylic binders, (meth)acrylic acid binders, paraffinic binders, and fatty acid binders. Preferred among such organic binders are those having a carboxyl group in the molecular chain, or carboxylic acid derivatives. More preferred are (meth)acrylic binders. Even more preferred are poly(meth)acrylic acid salts having water solubility. The poly(meth)acrylic acid salts may be products of copolymerization of acrylic acid or methacrylic acid with maleic acid, and may contain sulfonic acid. Examples of cations of the salts include sodium and ammonium.

Preferably, the polymer is one that shows a strong interaction with the zirconia surface, in order to increase the shape retention of the green compact. Preferred is the (meth)acrylic polymer binder, for example.

The strength of the interaction between the polymer and the zirconia surface can be predicted from, for example, the wettability of the polymer with the zirconia and the stabilizing agent. The wettability can be estimated from, for example, Hansen's solubility parameter, and the affinity $\delta$ can be determined from the following formula including the terms dispersion force ($\delta d$), dipole-dipole force ($\delta p$), and hydrogen bonding force (6h), which are components of solubility parameter per molar volume.

$$\delta = \{(\delta dA - \delta dB)^2 + (\delta pA - \delta pB)^2 + (\delta hA - \delta hB)^2\}^{1/2}$$

Smaller values of affinity $\delta$ mean higher affinity, and larger values of $\delta$ mean lower affinity.

Concerning the molecular weight of the constituent polymer in a binder of the present invention, it is preferable in view of the mechanical characteristics of the binder (i.e., the moldability of a green compact) that the constituent polymer have a weight-average molecular weight of 10,000 to 1,000,000, more preferably 30,000 to 500,000, even more preferably 70,000 to 480,000, yet more preferably 80,000 to 470,000, particularly preferably 100,000 to 450,000. With these ranges of weight-average molecular weights, it is easier to adjust the compression ratio R in the predetermined ranges when the binder is combined with other configurations, and to adjust the stress in the desired range at a compression ratio R of 0.6. Higher molecular weights are preferred because higher molecular weights mean higher molecular weights between entanglement points, and improve the tensile elongation, and the formability of molding into a green compact. The binder may be a combination of two or more polymers of different weight-average molecular weights, with a weight-average molecular weight of preferably 50,000 to 800,000, more preferably 100,000 to 500,000 after mixing.

The weight-average molecular weight is a weight-average molecular weight measured in terms of polystyrene by gel permeation chromatography (GPC).

The constituent polymer of a binder of the present invention may be one having a predetermined glass transition point (Tg), or a softening point in accordance therewith. Lower glass transition points Tg are preferred because the formability improves as a result of the polymer having a lower tensile strength due to the compression energy of molding into a green compact. Tg is preferably 50°C or less, more preferably 30°C or less, even more preferably 10°C or less. The binder may be a combination of two or more polymers having different glass transition points Tg. Preferably, the binder is a binder that combines a high Tg polymer and a low Tg polymer to lower the glass transition point of the high Tg polymer. With the foregoing ranges of Tg or softening points, it is easier to adjust the compression ratio R in the predetermined ranges when the binder is combined with other configurations. For the measurement of glass transition point Tg or softening point, for example, the extrapolated onset temperature in a DSC curve may be taken as the glass transition point Tg or softening point after a DSC measurement performed at a rate of temperature increase of 10°C/min in compliance with ISO 3146:2000 using a DSC (differential scanning calorimetry) measurement device (DSC 822) manufactured by Mettler-Toledo Inc. In this specification, Tg is used for crystalline polymers, whereas softening point is used instead for polymers that are not crystalline (amorphous polymers). The constituent polymer of the binder has a softening point of preferably -40°C or more, more preferably -5°C or more, even more preferably more than 0°C. The softening point is preferably 50°C or less, more preferably 30°C or less, even more preferably 10°C or less.

The production method of the constituent polymer of a binder of the present invention is not particularly limited, and may be a method that complies with known techniques. One example of a method that produces the constituent polymer of the (meth)acrylic binder is a method that produces a monomer containing a (meth)acryl group (a (meth)acryloyloxy group or a (meth)acrylamide group) by thermal polymerization using a radical polymerization initiator. The (meth)acryl group-containing monomer and the radical polymerization initiator are not particularly limited, and known (meth)acryl group-containing monomers and known radical polymerization initiators may be used as long as these can be set to provide the predetermined configurations (for example, the tensile elongation of the binder, the glass transition point (Tg) or softening point of the constituent polymer of the binder, and its weight-average molecular weight).

A binder of the present invention may be used with various additives, for example, such as an antioxidant, a heat stabilizer, a lubricant, a processing aid, an antistatic agent, a thermal degradation inhibitor, an ultraviolet absorber, a light stabilizer, a polymer processing aid, a colorant, and an impact resistance aid. In this case, the production method of the constituent polymer of a binder of the present invention is not particularly limited, as long as it is a method that can uniformly mix the two or more polymers with the additive. It is possible to use a method that complies with known techniques, and the polymers and additive may be mixed by being dissolved in water or organic solvent, or may be mixed by being melted and kneaded. The glass transition point (Tg) of the constituent polymer of the binder, or the softening point in accordance with glass transition point Tg, can be adjusted with addition of various additives.

The binder content in the present invention is preferably 1.1 parts or more by mass, more preferably 1.3 parts or more by mass, even more preferably 1.5 parts or more by mass with respect to 100 parts by mass of a zirconia raw material composition. In this specification, the term "zirconia raw material composition" refers to a composition that contains zirconia and a stabilizing agent but does not contain a binder. The term "zirconia composition" refers to a composition containing zirconia, a stabilizing agent, and a binder. The zirconia may contain hafnia, which is not readily separable from zirconia. When the binder content is 1.1 parts or more by mass with respect to 100 parts by mass of a zirconia raw material composition, the green compact can maintain its shape, without undergoing edge chipping or cracking. An excessively high binder content tends to increase the density of the green compact, and the density of the pre-sintered body or sintered body. In this respect, the binder content is preferably 5.0 parts or less by mass, more preferably 4.5 parts or less by mass, even more preferably 4.0 parts or less by mass with respect to 100 parts by mass of a zirconia raw material composition. With the foregoing ranges of binder contents, it is easier to adjust the compression ratio R in the predetermined ranges when the binder is combined with other configurations. For example, in certain embodiments, it is preferable that a binder with its constituent polymer satisfying the foregoing ranges of glass transition points (Tg) or softening points (for example, -10°C or more and 50°C or less, more than 0°C and 30°C or less) be used in the foregoing binder content ranges. In other embodiments, it is preferable that a binder with its constituent polymer satisfying the foregoing ranges of weight-average molecular weights (for example, 70,000 to 480,000) be used in the foregoing binder content ranges.

In still other embodiments, it is even easier to adjust the compression ratio R in the predetermined ranges, and to adjust the stress in the desired range at a compression ratio R of 0.6 when the binder used in the foregoing content ranges (by adjusting the proportions of the zirconia raw material composition and the binder (mass ratio)) is (i) a binder with a tensile elongation satisfying the foregoing ranges (for example, 120 to 800%), (ii) a binder with its constituent polymer satisfying the foregoing ranges of weight-average molecular weights (for example, 70,000 to 480,000), (iii) a binder with its constituent polymer satisfying the foregoing ranges of glass transition points (Tg) or softening points (for example, -10°C or more and 50°C or less, more than 0°C and 30°C or less), or a binder combining these binders.

The constituent primary particles in a granule of the present invention have an average particle diameter (hereinafter, also referred to as "average primary particle diameter") of preferably 45 to 200 nm, more preferably 50 to 180 nm, even more preferably 60 to 160 nm. An average particle diameter of less than 45 nm is not preferable because it makes the compression ratio less then 0.46. An average particle diameter of more than 200 nm is not preferable because it decreases sinterability, and makes it difficult to increase density after firing, and improve translucency. The constituent particles of the granule have a BET specific surface area of preferably 7.0 $m^2/g$ or more, more preferably 7.5 $m^2/g$ or more, even more preferably 8 $m^2/g$ or more as measured in compliance with JIS Z 8830:2013. Sintering is difficult with a BET specific surface area of less than 7.0 $m^2/g$, and the sintered body may opacify even when sintering is possible. The BET specific surface area is preferably 30 $m^2/g$ or less, more preferably 25 $m^2/g$ or less, even more preferably 20 $m^2/g$ or less. With a BET specific surface area of more than 30 $m^2/g$, the rate of temperature increase (described later) increases, and the influence of temperature nonuniformity in a furnace becomes more prominent. The translucency of the sintered body decreases when the firing time of sintering is reduced. In the present invention, a BET specific surface area is a specific surface area measured without distinguishing primary particles and secondary particles.

A green compact produced from a granule of the present invention has a bulk density of preferably 2.9 to 3.5 g/cm$^3$, more preferably 3.0 to 3.45 g/cm$^3$, even more preferably 3.1 to 3.4 g/cm$^3$. With a bulk density of less than 2.9 g/cm$^3$, it is difficult to increase the density of the pre-sintered body or sintered body. A bulk density of more than 3.5 g/cm$^3$ is not preferable because the thermally decomposed gas from the binder causes the green compact to expand, and decreases the density of the pre-sintered body or generates chipping or cracking.

A granule or green compact of the present invention comprises a stabilizing agent capable of preventing a phase transformation of zirconia. The stabilizing agent is preferably one capable of forming partially-stabilized zirconia. Examples of the stabilizing agent include oxides such as calcium oxide ($CaO$), magnesium oxide ($MgO$), yttrium oxide ($Y_2O_3$, hereinafter referred to as "yttria"), cerium oxide ($CeO_2$), scandium oxide ($Sc_2O_3$), niobium oxide ($Nb_2O_5$), lanthanum oxide ($La_2O_3$), erbium oxide ($Er_2O_3$), praseodymium oxide (PreOn), samarium oxide ($Sm_2O_3$), europium oxide ($Eu_2O_3$), and thulium oxide ($Tm_2O_3$). Preferred is yttria. The stabilizing agent may be used alone, or two or more thereof may be used in combination. The content of the stabilizing agent in a zirconia green compact of the present invention can be measured by a method, for example, such as inductively coupled plasma (ICP) emission spectral analysis or X-ray fluorescence analysis. In a zirconia green compact of the present invention, the content of the stabilizing agent is preferably 0.1 to 18 mol%, more preferably 1 to 15 mol%, even more preferably 3 to 8 mol% with respect to the total mole of zirconia and stabilizing agent.

In view of the strength and translucency of the zirconia sintered body obtained, the zirconia green compact preferably comprises yttria as a stabilizing agent. The yttria content is preferably 2.5 mol% or more, more preferably 3 mol% or more, even more preferably 3.5 mol% or more with respect to the total mole of zirconia and yttria. The translucency of the zirconia sintered body can further improve with a yttria content of 3 mol% or more. The yttria content is preferably 8.5 mol% or less, more preferably 7.5 mol% or less, even more preferably 7.0 mol% or less with respect to the total mole of zirconia and yttria. With a yttria content of 7.5 mol% or less, it is possible to achieve a greater reduction of a decrease in the strength of the zirconia sintered body obtained.

The following describes a granule production method. In this specification, the term "zirconia granule" may be used to refer to a granule comprising zirconia, a stabilizing agent, and a binder.

An example method of production of a zirconia granule is a method for producing a zirconia granule comprising:

a step of mixing zirconia (preferably, a zirconia powder) and the stabilizing agent to obtain a zirconia raw material composition (mixture) (mixing step);
a step of pulverizing the zirconia raw material composition to obtain particles (pulverized product) having a predetermined range of average particle diameters of primary particles (pulverization step); and
a step of adding a binder to the particles (pulverized product) after pulverization, and granulating the particles to obtain a zirconia granule (granulation step).

First, zirconia (preferably, a zirconia powder) and a stabilizing agent are mixed in predetermined proportions to prepare a mixture (mixing step). For example, when the stabilizing agent is yttria, zirconia and yttria may be mixed in such proportions that the yttria content falls in the foregoing ranges. The mixing is not particularly limited, and a known mixer may be used. When a solvent is used for mixing, the resultant mixture may have a form of a slurry, for example. The solvent is not particularly limited, and may be water or an organic solvent. Mixing may be achieved by dry mixing or wet mixing. The mixture may be pulverized so that the constituent particles of the zirconia granule have the foregoing average primary particle diameter (preferably, 45 to 200 nm), and that, optionally, the constituent particles of the zirconia granule have the foregoing BET specific surface area (pulverization step). The pulverization method is not particularly limited, and a known pulverizer (for example, a ball mill or a bead mill) may be used. The mixing and pulverization may be performed in a single step.

The binder is added in the predetermined amount to the pulverized product of the zirconia raw material composition (the mixture). In other embodiments, the binder may be added in the mixing step or in the pulverization step. When the binder is added in the mixing step, the zirconia composition obtained in the mixing step is pulverized in the pulverization step. The type of binder is as described above. The binder may be added to the mixture in such an amount that the binder content falls in the foregoing ranges. For example, when the binder is added in the pulverization step, the mixture and the binder may be dispersed in a solvent, for example, such as water (dispersing step), followed by pulverization with a pulverizer such as a ball mill or bead mill until the constituent powder of the mixture has the desired average primary particle diameter. The average primary particle diameter can be measured by, for example, a laser diffraction/scattering particle size distribution measurement method. For example, the average primary particle diameter can be measured by volume with ultrasonic waves being applied after a slurry diluted with water is subjected to 30 minutes of ultrasonication, using a laser diffraction/scattering particle size distribution analyzer (manufactured by Horiba Ltd. under the trade name Partica LA-950). After the mixing step and/or the pulverization step, the resulting mixture can be spray dried to obtain a zirconia granule (granulation step). The method of spray drying is not particularly limited, and a known spray drying device (such as a spray dryer) may be used.

Preferably, zirconia and the stabilizing agent (preferably, yttria) are separately prepared. For example, it is preferable to provide separate independent preparation steps (for example, production steps) for zirconia and stabilizing agent, instead of simultaneously precipitating zirconia and stabilizing agent (in the same step). In this way, dissolution of the stabilizing agent (preferably, yttria) in zirconia as a solid solution can be prevented in the production of zirconia pre-sintered body described below.

The following describes a case where the stabilizing agent is yttria. A zirconia powder forming a solid solution with yttria is generally prepared by coprecipitation or hydrolysis. In coprecipitation and hydrolysis, a mixture of hydrous zirconia and yttria is prepared from zirconium oxychloride and yttrium chloride in the same step, and the mixture is fired at 800°C to 900°C to prepare a zirconia powder stabilized with yttria (yttrium) dissolving as a solid solution. The yttria-dissolved zirconia is predominantly tetragonal and/or cubic in crystal system. The zirconia powder obtained in this fashion has a particle size on the order of several tens of nanometers. In order to use the zirconia powder as a raw material of zirconia sintered body, the fired material is pulverized to a predetermined particle size, and granulated into a zirconia granule.

In a zirconia granule prepared by coprecipitation or hydrolysis, the adhering temperature in the region of temperature in which the zirconia pre-sintered body is prepared occurs near temperatures at which the organic binder is removed, and/or the zirconia granule is more dependent on temperature. When there is unevenness in the state of the organic binder being present, the constituent primary particles of the zirconia granule prepared by coprecipitation or hydrolysis form strong necks in a localized fashion, according to the particle size. Because this increases the chipping rate of a milling workpiece when producing a milling workpiece by machining the zirconia pre-sintered body, zirconia granules prepared by coprecipitation or hydrolysis are not preferred.

The zirconia granule can be molded into a green compact by applying an external force. The molding method is not limited to specific methods, and a suitable method may be appropriately selected according to intended use. For example, molding may be achieved by press forming or injection molding. Molding may be performed in phases. For example, the zirconia granule may be additionally subjected to CIP after press forming. An example production method of a green compact is a method in which the compression ratio R is 0.46 to 0.53 when the zirconia granule is tapped and filled into a columnar die, and compressed by uniaxial pressing at a rate of 1 mm/s until the generated stress reaches 33 MPa. Preferably, the uniaxial pressing is performed under atmospheric pressure. For a greater reduction of density nonuniformity, the molded body obtained after uniaxial pressing may be subjected to CIP. Preferably, the CIP pressure is higher than the stress of uniaxial pressing. The CIP pressure is preferably more than 33 MPa, more preferably 50 MPa or more, even more preferably 100 MPa or more, particularly preferably 150 MPa or more. With a zirconia granule of the present invention, it is possible to obtain a green compact having excellent shape retention and low density nonuniformity, and the green compact can be used to obtain a pre-sintered body of low density nonuniformity. FIG. 1 shows a schematic view.

FIG. 1 illustrates a testing machine comprising a head, a die 2, and a mount 3. The testing machine can be used to obtain a green compact, as follows. A zirconia granule in the form of a dry powder is filled into the die 2, and pressed by uniaxially applying pressure into the die 2 along the axial direction 1 of the head at a rate of 1 mm/s. A green compact can then be obtained by fixing the head position upon the generated stress reaching 33 MPa. The testing machine may be, for example, a precision universal tester (AG-I 100kN, manufactured by Shimadzu Corporation under this trade name).

In the method of production of a green compact, the granule has a stress of preferably 7.20 MPa to 16 MPa, more preferably 7.50 MPa to 14 MPa, even more preferably 8.50 MPa to 12 MPa at a compression ratio R of 0.6 while being pressed in the columnar die.

The green compact may have a shape of a disc or a cuboid, or a shape of a dental product (for example, a crown shape).

A zirconia pre-sintered body is obtained by firing (i.e., pre-sintering) the green compact at a temperature that does not sinter the green compact. A zirconia pre-sintered body of the present invention can be a precursor (intermediate product) of a zirconia sintered body according to the present invention (described later). The zirconia pre-sintered body refers to a state where zirconia particles (powder) are forming necks, and are not fully sintered. The zirconia pre-sintered body includes those that have been molded. A zirconia pre-sintered body according to the present invention includes, for example, dental products (for example, crown-shaped prostheses) obtained by working a pre-sintered zirconia disc with a CAD/CAM (Computer-Aided Design/Computer-Aided Manufacturing) system.

A zirconia pre-sintered body of the present invention has the same zirconia and stabilizing agent content as the zirconia granule and green compact to be prepared into a zirconia pre-sintered body. The stabilizing agent contained in the zirconia pre-sintered body is preferably yttria in view of the strength and translucency of a sintered body fabricated from a zirconia pre-sintered body of the present invention.

In view of the strength of the zirconia pre-sintered body obtained, the pre-sintering temperature in a method of production of a zirconia pre-sintered body of the present invention is preferably 830 to 1,080°C, more preferably 850 to 1,050°C, even more preferably 895 to 1,000°C.

It is preferable to retain the material at the foregoing pre-sintering temperature as the highest pre-sintering temperature for a certain time period because it may be possible to confine the hardness of the zirconia pre-sintered body in the preferred range, and lower the chipping rate. The pre-sintering conditions depend on the desired density of the zirconia pre-sintered body, the average particle diameter of the constituent primary particles of the pre-sintered body, and the binder content. Preferably, the material is retained at the highest pre-sintering temperature for 30 minutes to 6 hours. The rate of temperature increase to the highest pre-sintering temperature, and the rate of temperature decrease from the highest pre-sintering temperature are preferably 300°C/min or less.

With a zirconia granule and green compact of the present invention, it is possible to produce a zirconia pre-sintered body of low density nonuniformity.

A zirconia pre-sintered body of the present invention can be milled to fabricate a milling workpiece. The milling method is not limited to specific methods, and a suitable method may be appropriately selected according to intended use. For example, a zirconia disc (pre-sintered body) can be milled into a shape of a dental product (for example, a crown-shaped prosthesis) with a CAD/CAM system to fabricate a milling workpiece.

The surface smoothness of a milling workpiece can be increased by using a tool such as a polisher (for example, PearlSurface® manufactured by Kuraray Noritake Dental Inc. under this trade name).

A zirconia sintered body (hereinafter, also referred to simply as "zirconia sintered body" or "sintered body") can be fabricated through the sintering step of firing a zirconia pre-sintered body of the present invention or its milling workpiece at a temperature that sinters zirconia particles (sinterable temperature). The firing temperature is, for example, preferably 1,400°C or more, more preferably 1,450°C or more. The firing temperature is, for example, preferably 1,650°C or less, more preferably 1,600°C or less. The rate of temperature increase, and the rate of temperature decrease are preferably 300°C/min or less. Here, "zirconia sintered body" refers to a state after full sintering.

In the sintering step, the retention time at the sinterable temperature (for example, the highest firing temperature) is preferably less than 120 minutes, more preferably 90 minutes or less, even more preferably 75 minutes or less, yet more preferably 60 minutes or less, particularly preferably 45 minutes or less, most preferably 30 minutes or less. The retention time is preferably 1 minute or more, more preferably 5 minutes or more, even more preferably 10 minutes or more.

In the sintering step, the retention time at the sinterable temperature (for example, the highest firing temperature) may be, for example, 25 minutes or less, 20 minutes or less, or 15 minutes or less.

Preferably, the rate of temperature increase and the rate of temperature decrease in the sintering step are set so as to reduce the time required for the sintering step. For example, the rate of temperature increase may be set so that the highest firing temperature is reached in the shortest possible time, depending on the capabilities of the furnace. The rate of temperature increase to the highest firing temperature may be, for example, 10°C/min or more, 50°C/min or more, 100°C/min or more, 120°C/min or more, 150°C/min or more, or 200°C/min or more. Preferably, the rate of temperature decrease from the highest firing temperature is set to a rate that does not cause defects, such as cracks, in the sintered body. For example, the sintered body may be allowed to cool at room temperature after the heating is finished.

With a zirconia granule and green compact of the present invention, it is possible to produce a high-translucency and high-strength zirconia sintered body of low density nonuniformity.

A granule of the present invention can be suitably used for ceramics for pressure molding.

EXAMPLES

The following describes the present invention in greater detail by way of Examples. The present invention, however, is in no way limited by the following descriptions.

<Measurement Method of Compression Ratio R>

A universal tester AGS-X (Shimadzu Corporation), control software TRAPEZIUM LITE X (Shimadzu Corporation), and a load cell 5000N (Shimadzu Corporation) were used.

The granule obtained for each Example and Comparative Example was tapped and filled into a columnar die in compliance with JIS R 1628:1997, and, with the granule held from the top and bottom in the universal tester having the punches secured to it, compression was initiated immediately before the upper punch of the die contacted the top surface of the die filling the granule. Immediately before starting compression, the distance between the punches was adjusted to match the height H of the granule tapped and filled into the columnar die. On control software, the punch was set to stop applying pressure upon reaching 33 MPa, and measurements were taken in low-speed mode. The compression rate of punch was 1 mm/s, and the test force was measured every 0.1 seconds. The measured test force was divided by the cross sectional area of the columnar die to derive a stress value, and the punch was stopped when the stress in the granule tapped and filled into the die had reached a predetermined value. The compression ratio R was calculated using the amount of strain D at this point (a mean value for n = 3). The same method was used to calculate stress at a compression ratio R of 0.6 (a mean value for n = 3).

<Measurement of Binder Elongation Rate>

Specimens of various binders were prepared by cast film deposition (5 mm in length × 30 mm in width × 1 mm in thickness). With a 200 g weight attached to the lower end of a longitudinally hanging binder specimen, the elongation rate was calculated from the length after 180 seconds as a percentage of the initial length taken as 100%, using the following formula (a mean value for n = 3).

$$\text{(Elongation rate)} = \text{(length after 180 seconds)} \div \text{(initial length)} \times 100$$

<Measurement Method of Average Particle Diameter of Constituent Primary Particles of Granule>

The granules obtained in each Example or Comparative Example was used to obtain a surface image, using a scanning electron microscope (manufactured by Keyence under the trade name VE-9800). The acquired image was analyzed to calculate the average particle diameter. For the measurement of particle diameter, the captured SEM image was binarized with image analysis software (Image-Pro Plus manufactured by Hakuto Co., Ltd. under this trade name), and particles were recognized from the field (region) by adjusting the brightness range to provide clear grain boundaries. In areas with unclear grain boundaries, a reduce filter was applied to the region until each region reduced to a single or multiple points, and Voronoi polygons were created by using these points as generators of Voronoi polygons. Lines were drawn that connect the midpoints between two adjacent generators, and these lines were superimposed on the original particle image to separate adjacent particles. For example, in the case where image processing produced a particle that looks like a gourd, the particle was separated into two by assuming that two adjoining circular particles are seen as a single particle. In a processing file recognizing primary particle diameter, "Diameter" was selected from "Count/size dialog" to find the distribution (n = 4). Specifically, a mean value of average particle diameters (primary particle diameters) measured in each field with the image analysis software (trade name: Image-Pro Plus) was determined for four fields from one sample.

<Shape Retention of Green Compact>

The green compact used for the determination of compression ratio R was visually checked for chipping at the corners of the rectangle (n = 5). The green compact was evaluated as having high shape retention (Good) when there was no chipping, and no shape retention (Poor) when sub-millimeter chipping was observed in any of the specimens. The results are presented in Table 2.

<Measurement Method of Bulk Density of Green Compact>

The columnar green compact obtained by using the method of Examples or Comparative Examples was accurately measured for dimensions with a micrometer. Separately, the mass was measured with a precision balance. The density was calculated as a ratio of (mass of green compact) to (volume of green compact) (a mean value for n = 3). The results are presented in Table 2. The green compact was evaluated as being "Poor" when the calculated bulk density was less than 2.9 g/cm$^3$ or more than 3.5 g/cm$^3$, "Moderate" when the bulk density was 2.9 g/cm$^3$ or more, and "Good" when the bulk density was 3.1 g/cm$^3$ or more.

<Evaluation Method of Density Uniformity of Pre-Sintered Body>

The green compact obtained in each Example or Comparative Example was placed in an electric furnace that had been set to 1,000°C, and was pre-sintered into a pre-sintered body. From the pre-sintered body, multiple test pieces, each measuring 10 mm$^3$, were cut out at randomly selected positions by changing the location of cutting. The bulk density was then calculated from the mass and volume of each test piece (a mean value for n = 3). The results are presented in Table 2. The green compact was evaluated as having high density uniformity when the error in the calculated bulk density values was within 3.5% (Good), and having low density uniformity when the error exceeded 3.5% (Poor). The error in bulk density values is preferably 3.5% or less, more preferably 3.4% or less, even more preferably 3.3% or less. When the error is more than 3.5%, it may not be possible to obtain a sintered body of the desired shape as a result of an increased shrinkage rate of the sintered body due to the nonuniform bulk density of the pre-sintered body.

<Evaluation Method of Density Uniformity of Sintered Body>

From the pre-sintered body obtained in the same manner described above, multiple test pieces, each measuring 10 mm$^3$, were cut out at randomly selected positions by changing the location of cutting. The test pieces were each fired into a sintered body by being retained for 2 hours at 1,500°C in Examples 1 to 10 and Comparative Examples 1 to 7, and at 1,450°C in Comparative Examples 8 to 10, using these temperatures as highest firing temperatures. The density was then calculated from the mass and volume of each sintered body (a mean value for n = 3). The results are presented in Table 2. The sintered body was evaluated as having high density uniformity when the error in the calculated bulk density values was within 3.1% (Good), and having low density uniformity when the error exceeded 3.1% (Poor). The error in bulk density values is preferably 3.1% or less, more preferably 3.0% or less.

<Measurement Method of Translucency of Sintered Body>

From the pre-sintered body obtained by using the same method described above, a specimen was cut out so that it had a thickness of 1.2 mm after firing. The specimen was fired into a 1.2 mm-thick sintered body by being retained for 2 hours at 1,500°C in Examples 1 to 10 and Comparative Examples 1 to 7, and at 1,450°C in Comparative Examples 8 to 10, using these temperatures as highest firing temperatures. The sintered body was measured for lightness (Lw*) by measuring chromaticity against a white background using a spectrophotometer (Crystaleye manufactured by Olympus Corporation under this trade name) in 7-band measurement mode with an LED light source. The same specimen was also measured for lightness ($L_B$*) by measuring chromaticity against a black background using the same measurement device in the same measurement mode with the same light source. The difference between these values ($\Delta L^*_{(W-B)}$ = (Lw*) - ($L_B$*)) was then determined as the translucency ($\Delta L^*_{(W-B)}$) (a mean value for n = 3).
The evaluation was made using the following criteria.

Good: translucency is 12.0 or more with a yttria content of 4 mol% or less
Good: translucency is 15.0 or more with a yttria content of more than 4 mol% and 5.5 mol% or less
Good: translucency is 16.0 or more with a yttria content of more than 5.5 mol%
The results are presented in Table 2.

<Measurement Method of Biaxial Flexural Strength of Sintered Body>

From the pre-sintered body obtained by using the same method described above, a specimen was cut out so that it had a 15 mm diameter and a 1.2 mm thickness after firing. The specimen was fired into a 1.2 mm-thick sintered body of 15 mm diameter by being retained for 2 hours at 1,500°C in Examples 1 to 10 and Comparative Examples 1 to 7, and at 1,450°C in Comparative Examples 8 to 10. The sintered body was then measured for biaxial flexural strength in compliance with JIS T 6526:2012, using a universal precision tester autograph (trade name AG-I 100kN, manufactured by Shimadzu Corporation) at a crosshead speed of 0.5 mm/min (a mean value for n = 3). The results are presented in Table 2.

<Examples 1 to 10, Comparative Examples 1 to 7>

A zirconia raw material (zirconium dioxide, $ZrO_2$) and a yttria raw material (yttrium oxide, $Y_2O_3$) were weighed so as to give the yttria content shown in Table 1 (yttria content with respect to the total mole of zirconia and yttria). After being introduced into water, these materials were placed in a rotary container with zirconia beads, and were mixed by being pulverized with a ball mill until the desired primary particle diameter was reached. The primary particle diameter was measured by volume with ultrasonic waves being applied after a slurry diluted with water was subjected to 30 minutes of ultrasonication, using a laser diffraction/scattering particle size distribution analyzer (manufactured by Horiba Ltd. under the trade name Partica LA-950). To the slurry was introduced a binder that had been weighted to give the content shown in Table 1, and the mixture was stirred with rotary vanes. After being stirred, the slurry was granulated dry to obtain a granule, using a spray dryer. The granule was filled into a columnar die, and, after applying vibration by tapping, the granule was compressed by uniaxial pressing at a rate of 1 mm/s to 33 MPa. This was followed by CIP at a hydraulic pressure of 170 MPa.

<Comparative Examples 8 to 10>

Zpex®, Zpex® 4, and Zpex Smile® (manufactured by Tosoh Corporation) were used as granules, and the green compact was prepared using the same method used in Example 1.

[Table 1]

| | Composition | | | | | | Powder | Production of green compact from granule | | | |
| | Yttria content [mol%] | Binder | | | | | Primary particle diameter [nm] | Initial height H [cm] | Compressive strain D [cm] | Compression ratio R | Stress at compression ratio of 0.6 [MPa] |
| | | Type | Tensile elongation [%] | Weight-average molecular weight | Tg or softening point[1*] [°C] | Content[2*] [parts by mass] | | | | | |
|---|---|---|---|---|---|---|---|---|---|---|---|
| Ex. 1 | 3.5 | Acrylic | 150 | 400000 | 5 | 2.0 | 112 | 11.00 | 5.73 | 0.48 | 8.56 |
| Ex. 2 | 3.5 | Acrylic | 150 | 400000 | 5 | 1.5 | 101 | 10.90 | 5.78 | 0.47 | 7.21 |
| Ex. 3 | 3.5 | Acrylic | 670 | 400000 | 10 | 2.0 | 132 | 9.50 | 4.77 | 0.50 | 10.35 |
| Ex. 4 | 3.5 | Acrylic | 670 | 400000 | 10 | 1.5 | 119 | 9.49 | 5.15 | 0.46 | 10.11 |
| Ex. 5 | 3.5 | Acrylic | 420 | 400000 | 5 | 2.0 | 101 | 9.52 | 5.11 | 0.46 | 10.09 |
| Ex. 6 | 3.5 | Acrylic | 320 | 200000 | -5 | 2.0 | 114 | 10.99 | 5.91 | 0.46 | 9.11 |
| Ex. 7 | 5.0 | Acrylic | 150 | 400000 | 5 | 2.0 | 141 | 11.01 | 5.70 | 0.48 | 8.40 |
| Ex. 8 | 5.0 | Acrylic | 150 | 400000 | 5 | 1.5 | 129 | 10.98 | 5.89 | 0.46 | 7.55 |
| Ex. 9 | 6.0 | Acrylic | 150 | 400000 | 5 | 2.0 | 150 | 11.07 | 5.68 | 0.49 | 8.35 |
| Ex. 10 | 6.0 | Acrylic | 150 | 400000 | 5 | 1.5 | 142 | 11.01 | 5.74 | 0.48 | 7.57 |
| Com. Ex. 1 | 3.5 | Acrylic | 150 | 400000 | 5 | 1.0 | 110 | 10.80 | 6.10 | 0.44 | 7.19 |
| Com. Ex. 2 | 3.5 | Acrylic | 670 | 400,000 | 10 | 1.0 | 128 | 9.49 | 5.80 | 0.39 | 10.06 |
| Com. Ex. 3 | 5.0 | Acrylic | 150 | 400000 | 5 | 1.0 | 134 | 10.88 | 6.10 | 0.44 | 6.99 |
| Com. Ex. 4 | 6.0 | Acrylic | 150 | 400000 | 5 | 1.0 | 160 | 10.91 | 5.99 | 0.45 | 6.81 |
| Com. Ex. 5 | 3.5 | Acrylic | 110 | 60000 | 0 | 2.0 | 110 | 11.01 | 5.02 | 0.54 | 11.98 |
| Com. Ex. 6 | 3.5 | Acrylic | 110 | 60000 | 0 | 1.5 | 110 | 10.99 | 4.60 | 0.58 | 12.55 |

(continued)

| | Composition | | | | | | Powder | Production of green compact from granule | | | |
|---|---|---|---|---|---|---|---|---|---|---|---|
| | Yttria content [mol%] | Binder | | | | | Primary particle diameter [nm] | Initial height H [cm] | Compressive strain D [cm] | Compression ratio R | Stress at compression ratio of 0.6 [MPa] |
| | | Type | Tensile elongation [%] | Weight-average molecular weight | Tg or softening point1* [°C] | Content2* [parts by mass] | | | | | |
| Com. Ex. 7 | 3.5 | Polyvinyl alcohol-based | 110 | 75000 | 95 | 2.0 | 110 | 10.52 | 3.91 | 0.63 | 12.16 |
| Com. Ex. 8 | 3.0 | Zpex was used as powder | | | | 3.0 | 40 | 11.42 | 6.38 | 0.44 | 6.16 |
| Com. Ex. 9 | 4.0 | Zpex 4 was used as powder | | | | 3.0 | 40 | 10.61 | 5.87 | 0.45 | 5.60 |
| Com. Ex. 10 | 5.5 | Zpex Smile was used as powder | | | | 3.0 | 40 | 10.91 | 6.09 | 0.44 | 5.11 |
| 1*: Tg in Comparative Example 7, and softening point in all the others.<br>2*: The binder content represents the mass with respect to 100 parts by mass of a zirconia raw material composition containing zirconia and a stabilizing agent but containing no binder. | | | | | | | | | | | |

[Table 2]

| | Evaluation of green compact | | | Evaluation of pre-sintered body | | Evaluation of sintered body | | | |
| --- | --- | --- | --- | --- | --- | --- | --- | --- | --- |
| | | | | Uniformity | | | | Uniformity | Strength |
| | Shape retention | Bulk density [g/cm$^3$] | | Bulk density error [%] | | Translucency ΔL* (W-B) | | Bulk density error [%] | Biaxial flexural strength [MPa] |
| Ex. 1 | Good | Good | 3.13 | Good | 3.3 | Good | 12.4 | Good | 3.0 | 767 |
| Ex. 2 | Good | Good | 3.14 | Good | 2.9 | Good | 12.6 | Good | 2.6 | 721 |
| Ex. 3 | Good | Good | 3.24 | Good | 2.6 | Good | 12.4 | Good | 2.3 | 837 |
| Ex. 4 | Good | Good | 3.33 | Good | 2.2 | Good | 12.5 | Good | 2.0 | 918 |
| Ex. 5 | Good | Good | 3.28 | Good | 2.5 | Good | 12.7 | Good | 2.3 | 787 |
| Ex. 6 | Good | Good | 3.11 | Good | 3.1 | Good | 12.4 | Good | 2.8 | 751 |
| Ex. 7 | Good | Good | 3.12 | Good | 2.9 | Good | 15.5 | Good | 2.6 | 630 |
| Ex. 8 | Good | Good | 3.14 | Good | 2.8 | Good | 16.0 | Good | 2.5 | 749 |
| Ex. 9 | Good | Good | 3.12 | Good | 3.0 | Good | 16.0 | Good | 2.7 | 543 |
| Ex. 10 | Good | Good | 3.13 | Good | 2.8 | Good | 16.3 | Good | 2.5 | 581 |
| Com. Ex. 1 | Poor | | | | | | | | |
| Com. Ex. 2 | Poor | | | | | | | | |
| Com. Ex. 3 | Poor | | | | | | | | |
| Com. Ex. 4 | Poor | | | | | | | | |
| Com. Ex. 5 | Good | Moderate | 3.09 | Good | 3.2 | Poor | 11.6 | Good | 2.9 | 705 |
| Com. Ex. 6 | Good | Moderate | 3.07 | Good | 2.9 | Poor | 11.5 | Good | 2.6 | 731 |
| Com. Ex. 7 | Good | Moderate | 2.92 | Good | 3.2 | Poor | 11.5 | Good | 2.9 | 712 |
| Com. Ex. 8 | Good | Poor | 2.76 | Poor | 3.8 | Good | 12.2 | Poor | 3.4 | 712 |
| Com. Ex. 9 | Good | Poor | 2.89 | Poor | 4.0 | Good | 13.8 | Poor | 3.6 | 595 |
| Com. Ex. 10 | Good | Poor | 2.82 | Poor | 3.6 | Good | 15.4 | Poor | 3.2 | 480 |

The green compacts had poor shape retention, and chipping was observed in Comparative Examples 1 to 4 in which the compression ratio R was 0.45 or less. The sintered bodies had poor translucency in Comparative Examples 5 to 7 in which the compression ratio R was 0.54 or more. The green compacts had low bulk densities, and produced only pre-sintered bodies and sintered bodies of low uniformity in Comparative Examples 8 to 10 in which the compression ratio R was 0.45 or less, and the stress value was small at a compression ratio of 0.6. In contrast, the green compacts had good shape retention, and produced uniform pre-sintered bodies and sintered bodies, and high-translucency and high-strength zirconia sintered bodies in Examples, in which the compression ratio R was in the 0.46 to 0.53 range. These results from Examples confirmed that high translucency and high strength can be achieved at the same time, and these can be satisfied in good balance even with increased yttria contents.

Reference Signs List

1    Direction of uniaxial pressing of head
2    Die
3    Mount

**Claims**

1.  A granule comprising zirconia, a stabilizing agent capable of preventing a phase transformation of zirconia, and a binder,
    the granule having a compression ratio R of 0.46 to 0.53 as calculated by the formula (1) below when tapped and filled into a columnar die in compliance with JIS R 1628:1997, and compressed by uniaxial pressing at a rate of 1 mm/s to 33 MPa,

    $$R = (H-D)/H \qquad (1)$$

    wherein H represents a height of the granule tapped and filled into the columnar die before applying pressure, and D represents an amount of strain up to 33 MPa.

2.  The granule according to claim 1, which has a stress of 7.20 MPa or more at a compression ratio R of 0.6 while being pressed in the columnar die.

3.  The granule according to claim 1 or 2, wherein the binder is a (meth)acrylic binder.

4.  The granule according to any one of claims 1 to 3, wherein primary particles constituting the granule have an average particle diameter of 45 to 200 nm.

5.  The granule according to any one of claims 1 to 4, wherein the stabilizing agent is yttria.

6.  The granule according to claim 5, wherein the content of the yttria is 2.5 to 8.5 mol% with respect to the total mole of the zirconia and the yttria.

7.  A green compact comprising a granule of any one of claims 1 to 6, and having a bulk density of 2.9 to 3.5 g/cm³.

8.  The green compact according to claim 7, wherein the stabilizing agent contained in the granule is yttria.

9.  The green compact according to claim 8, wherein the content of the yttria is 2.5 to 8.5 mol% with respect to the total mole of the zirconia and the yttria.

10. A method for producing a granule, comprising:

    a step of mixing zirconia and a stabilizing agent capable of preventing a phase transformation of zirconia to obtain a zirconia raw material composition;
    a pulverization step of pulverizing the zirconia raw material composition to obtain particles having an average particle diameter of 45 to 200 nm in primary particles; and
    a step of adding a binder to the particles, and granulating the particles to obtain a granule that comprises zirconia, a stabilizing agent capable of preventing a phase transformation of zirconia, and the binder.

11. The method for producing a granule according to claim 10, wherein the binder is a (meth)acrylic binder.

**12.** The method for producing a granule according to claim 10 or 11, wherein the stabilizing agent is yttria.

**13.** A method for producing a green compact that has a compression ratio R of 0.46 to 0.53 as calculated by the formula (1) below when a granule of any one of claims 1 to 6 is tapped and filled into a columnar die, and compressed by uniaxial pressing at a rate of 1 mm/s to 33 MPa,

$$R = (H-D)/H \qquad (1)$$

wherein H represents a height of the granule tapped and filled into the columnar die before applying pressure, and D represents an amount of strain up to 33 MPa.

**14.** The method for producing a green compact according to claim 13, wherein the green compact has a stress of 7.20 MPa or more at a compression ratio R of 0.6 while the granule being pressed in the columnar die.

FIG.1

## INTERNATIONAL SEARCH REPORT

| International application No. |
| --- |
| **PCT/JP2021/047686** |

| A. CLASSIFICATION OF SUBJECT MATTER |
| --- |
| ***C01G 25/02***(2006.01)i; ***A61C 13/083***(2006.01)i; ***C04B 35/486***(2006.01)i; ***C04B 35/626***(2006.01)i; ***C04B 35/634***(2006.01)i; ***A61C 5/70***(2017.01)i<br>FI:  C04B35/626 950; C04B35/486; A61C5/70; A61C13/083; C04B35/634 240; C01G25/02 |
| According to International Patent Classification (IPC) or to both national classification and IPC |

| B. FIELDS SEARCHED |
| --- |
| Minimum documentation searched (classification system followed by classification symbols)<br>C01G25/02; A61C13/083; C04B35/00-C04B35/84; A61C5/70 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used)<br>JSTPlus/JMEDPlus/JST7580 (JDreamIII) |

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 2012-500770 A (H.C. STARCK GMBH) 12 January 2012 (2012-01-12)<br>    claims, paragraph [0009], example 2 | 1-12 |
| A | paragraph [0015] | 13-14 |
| X | WO 2018/056331 A1 (KURARAY NORITAKE DENTAL INC) 29 March 2018 (2018-03-29)<br>    claims, paragraphs [0079], [0141]-[0142], [0170], [0172] | 10-12 |
| A | | 1-9, 13-14 |
| A | JP 2003-342059 A (TODA KOGYO CORP) 03 December 2003 (2003-12-03)<br>    paragraph [0049] | 1-14 |
| A | JP 2006-27914 A (TORAY IND INC) 02 February 2006 (2006-02-02)<br>    example 3 | 1-14 |
| A | JP 6-92714 A (TOSOH CORP) 05 April 1994 (1994-04-05) | 1-14 |
| A | JP 2019-212582 A (NIPPON CATALYTIC CHEM IND) 12 December 2019 (2019-12-12)<br>    comparative example 1 | 1-14 |

| ✓ Further documents are listed in the continuation of Box C. | ✓ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **02 February 2022** | **15 February 2022** |
| Name and mailing address of the ISA/JP | Authorized officer |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/047686** |

**C. DOCUMENTS CONSIDERED TO BE RELEVANT**

| Category* | Citation of document, with indication, where appropriate, of the relevant passages | Relevant to claim No. |
| --- | --- | --- |
| A | 椿淳一郎ら, 圧密・緩和法による噴霧乾燥顆粒の力学特性評価-圧密領域の解析-, JOURNAL OF THE CERAMIC SOCIETY OF JAPAN, 1999, vol. 107, no. 11, pp. 1093-1098 3.1 fig. 3, (TSUBAKI, Junichiro et al. MECHANICAL CHARACTERIZATON OF SPRAY-DRIED GRANULES BY COMPRESSION STRESS-RELAXATION TECHNIQUE -ANALYSIS OF COMPRESSION BEHAVIOR-.) | 1-14 |
| A | DURMUS, Cagatay et al. Experimental synthesis of granulated zirconia powders by spray dryer. MATERIALS LETTERS. 2015, vol. 145, pp. 243-246 1. | 1-14 |

Form PCT/ISA/210 (second sheet) (January 2015)

**INTERNATIONAL SEARCH REPORT**
Information on patent family members

International application No.

**PCT/JP2021/047686**

| Patent document cited in search report | | | Publication date (day/month/year) | Patent family member(s) | Publication date (day/month/year) |
|---|---|---|---|---|---|
| JP | 2012-500770 | A | 12 January 2012 | US 2011/0160036 A1 claims, paragraphs [0011], [0023], example 2 | |
| WO | 2018/056331 | A1 | 29 March 2018 | US 2019/0231651 A1 claims, paragraphs [0082], [0144]-[0145], [0154], [0155] CN 109790047 A | |
| JP | 2003-342059 | A | 03 December 2003 | (Family: none) | |
| JP | 2006-27914 | A | 02 February 2006 | (Family: none) | |
| JP | 6-92714 | A | 05 April 1994 | (Family: none) | |
| JP | 2019-212582 | A | 12 December 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015143178 A

- JP 2006027914 A

**Non-patent literature cited in the description**

- **JUNICHIRO TSUBAKI et al.** Mechanical Characterization of Spray-Dried Granules by Compression and Stress-Relaxation Technique. *Journal of the Ceramic Society of Japan,* 1999, vol. 107 (11), 1093-1098

- **JUNICHIRO TSUBAKI et al.** Mechanical Characterization of Spray-Dried Granules by Compression and Stress-Relaxation Technique. *Journal of the Ceramic Society of Japan,* 1999, vol. 107 (12), 1183-1187
- **JUNICHIRO TSUBAKI et al.** Roles of Chemical Engineering in Ceramic Industry. *Chemical Engineering,* 2003, vol. 48 (1), 34-38